# EUROPÄISCHE PATENTSCHRIFT

(11) **EP 1 865 144 B1**
(45) Veröffentlichungstag und Bekanntmachung des Hinweises auf die Patenterteilung: **28.04.2010**
(21) Anmeldenummer: 07108133.5
(22) Anmeldetag: 14.05.2007
(51) Int. Cl.: E21B 10/44, E21B 10/58, B23B 51/02

(54) **Hartstoffkopf und Drehschlagbohrer**
Hard material head and rotary percussion drill
Tête dure et perceuse à percussion

(30) Priorität: 30.05.2006 DE 102006000251
(43) Veröffentlichungstag der Anmeldung: 12.12.2007
(73) Patentinhaber: HILTI Aktiengesellschaft, 9494 Schaan (LI)
(72) Erfinder: Koch, Olaf, 86916, Kaufering (DE)
(74) Vertreter: Wildi, Roland

(56) Entgegenhaltungen:
- EP-A1- 1 267 033
- WO-A-98/19813
- WO-A-2005/115667
- WO-A-2006/114306
- DE-A1-102005 041 331
- US-A1- 2003 039 523
- US-A1- 2004 208 716
- US-A1- 2006 072 976

## Beschreibung

Die Erfindung bezeichnet einen Hartstoffkopf für einen Drehschlagbohrer, insbesondere im Durchmesserbereich von 4 mm bis 45 mm, speziell von 8 mm bis 16 mm, sowie einen damit bestückten Drehschlagbohrer zur Verwendung mit drehschlagenden Handwerkzeugmaschinen.

Üblicherweise, bspw. nach der DE10208631, sind derartige Drehschlagbohrer für drehschlagende Handwerkzeugmaschinen im Schaftende mit einer meisselförmigen Hartmetallplatte bestückt, die bodenseitig sowie über zwei gegenüberliegende Befestigungsseitenflächen in einen sich diametral durch das Schaftende erstreckenden Aufnahmeschlitz hart eingelötet ist.

Nach der DE4419641 ist ein zum Drehschlagbohren von armiertem Beton optimierter Drehschlagbohrer mit einem kompakten Hartstoffkopf mit Hauptschneiden und Nebenschneiden bekannt, der über die den Schneiden gegenüberliegende Bodenfläche stumpf auf die Grundfläche aufgelötet ist. Bei einem Armierungseisentreffer hebt die vorlaufende Nebenschneide den Bohrkopf axial etwas ab, so dass sich dieser nicht im Armierungseisen verhakt.

Nach der DE4339245 ist ein zum Drehschlagbohren von armiertem Beton optimierter Drehschlagbohrer mit einem quaderförmige Hartstoffkopf mit Hauptschneiden und Nebenschneiden bekannt, der schaftseitig einen diagonal verlaufenden Schlitz für einen zugeordneten formschlüssig eingreifenden Zapfen des Schaftendes aufweist und ansonsten stumpf aufgelötet ist.

Nach der DE2246965 ist ein schmetterlingsförmiger Hartstoffkopf mit ausschliesslich einer sich diagonal erstreckenden Schneide und genau je zwei einander gegenüberliegenden konvexen und konkaven Seitenflächen bekannt, wobei nur die konvexen Seitenflächen umlaufend längs ausschliesslich im Mittelteil schaftseitig offene Randtaschen ausbilden, in die passend zugeordnete, punktförmige Axialverzapfungen des Schaftendes formschlüssig eingreifen sowie die Seitenflächen axial glatt fortsetzen. Drehschlagbohrer mit ausschliesslich einer sich diagonal erstreckenden Schneide, also genau zwei umlaufend verteilten Schneidkanten, neigen beim Drehschlagbohren von armiertem Beton zum Verhaken im Armierungseisen.

Nach der DE10006936 ist ein mit Hauptschneiden und Nebenschneiden zum Drehschlagbohren von armiertem Beton optimierter Drehschlagbohrer mit einem X-förmigen Hartstoffkopf aus Sinterwerkstoff bekannt, der im Schaftende ausschliesslich über zwei einander gegenüberliegende konkave Befestigungsseitenflächen und der Bodenfläche in einem Schlitz zwischen zwei passend X-förmig angeordneten, umlaufend länglichen Axialverzapfungen verlötet ist. Der zugeordnete X-förmige Hartstoffkopf nach DE10006932 weist in der den Schneidkanten gegenüberliegenden Bodenfläche ausschliesslich an den einander gegenüberliegenden konkaven Befestigungsseitenflächen eine Fase auf. Die radial über die axiale Projektion der konkaven Befestigungsseitenflächen des Hartstoffkopfes überstehenden Axialverzapfungen des Schaftendes begrenzen die sich bis zum Hüllkreis erstreckende Abfuhrnut für abgetragenes Bohrklein und damit die maximale Bohrleistung, speziell im Durchmesserbereich von 8 mm bis 16 mm.

Zudem weist nach der US2003039523 ein Spiralbohrer einen Bohrerschaft und einen wechselbaren Hartstoffkopf mit zumindest drei in einem Hüllkreis umlaufend verteilten Schneidkanten, mit einer zur stoffschlüssigen Befestigung an einem Schaftende des Bohrerschafts des Spiralbohrers ausgebildeten, diesem gegenüberliegenden Bodenfläche und mit konkave Seitenflächen auf, wobei im radialen Äusseren des im Hartstoffkopf fortgesetzten Wendelstegs zur Bodenfläche offene Randtaschen ausgebildet sind, in welche eine passend zugeordnete Axialverzapfung des Schaftendes formschlüssig eingreifbar ist.

Die Aufgabe der Erfindung besteht in der Erhöhung der Bohrleistung von zum Drehschlagbohren von armiertem Beton optimierten Drehschlagbohrern.

Die Aufgabe wird im Wesentlichen durch die Merkmale des Anspruchs 1 gelöst. Vorteilhafte Weiterbildungen ergeben sich aus den Unteransprüchen.

So weist ein Hartstoffkopf für einen Drehschlagbohrer zumindest drei in einem Hüllkreis umlaufend verteilte Schneidkanten, eine zur stoffschlüssigen Befestigung an einem Schaftende des Bohrerschafts des Drehschlagbohrers ausgebildete, diesem gegenüberliegende Bodenfläche und konkave Seitenflächen auf, wobei in zumindest zwei einander gegenüberliegenden konkaven Seitenflächen je eine zur Bodenfläche offene Randtasche ausgebildet ist, in welche eine passend zugeordnete Axialverzapfung des Schaftendes formschlüssig eingreifbar ist.

Durch die Ausbildung je einer zur formschlüssigen Axialverzapfung mit dem Schaftende geeigneten Randtasche in den gegenüberliegenden konkaven Seitenflächen können die Axialverzapfungen radial in diese eingreifen und eröffnen somit zusätzlichen Freiraum für die sich bis zum Hüllkreis erstreckende Abfuhrnut.

Vorteilhaft ist die Randtasche axial prismatisch ausgebildet, wodurch die exakte koaxiale Zentrierung in den formschlüssig passend zugeordneten Axialverzapfungen unabhängig von beim stoffschlüssigen Hartverlöten mit dem Schaftende auftretenden Axialtoleranzen ist.

Vorteilhaft erstreckt sich die Taschenkonturlänge der Randtasche ausschliesslich über einen Mittenlängenbereich der konkaven Seitenfläche, wodurch deren Tangentialrand zur Drehmomentübertragung ausgenutzt wird.

Alternativ vorteilhaft erstreckt sich die Taschenkonturlänge der Randtasche über die gesamte umlaufende Seitenlänge der Seitenfläche, wodurch die Gesamtheit der Tangentialflächenkomponenten der konkav gekrümmten Seitenfläche zur Drehmomentübertragung ausgenutzt wird.

Vorteilhaft bilden genau vier konkave Seitenflächen je eine Randtasche aus, wodurch die Symmetrie zu einem viergängigen Schaft gegeben ist.

Alternativ vorteilhaft bilden ausschliesslich zwei einander gegenüberliegende Seitenflächen je eine Randtasche aus, wodurch die bis zur Bodenfläche gerade verlaufenden (oder zur Aufnahme von hervorquellenden Bronze leicht angefasten) übrigen Seitenflächen stumpf auf die Stirnfläche des Schaftendes aufgesetzt und somit in diesem axial glatt (d.h. ohne Sprung oder Knick) fortgesetzt werden können.

Vorteilhaft liegt die Summe der umlaufenden Taschenlänge aller Randtaschen im Bereich von einem Drittel bis zu zwei Drittel, weiter vorteilhaft bei der Hälfte, des Umfangs des Hüllkreises, wodurch die zugeordneten, diese Randtaschen exakt ausfüllenden Axialverzapfungen hinreichend torsionssteif zur Übertragung hoher Drehmomente ausgebildet sind.

Vorteilhaft liegt die Taschenbreite der Randtasche im Bereich von einem Zwanzigstel bis zu einem Fünftel, weiter vorteilhaft bei einem Zehntel, des Durchmessers des Hüllkreises, wodurch die zugeordnete, diese Randtasche exakt ausfüllende Axialverzapfung hinreichend dünnflächig ausgebildet ist, um sich ohne Querkontraktionsbehinderung im hochdehnbaren Ebenen Spannungszustand (ESZ) zu befinden.

Vorteilhaft liegt die axiale Taschenhöhe der Randtasche im Bereich von einem Drittel bis zu zwei Dritteln, weiter vorteilhaft bei der Hälfte, der Radialrandhöhe der Seitenflächen, wodurch über Scherspannungen an den Axialverzapfungen eine weitgehende Krafteinleitung der bei zweckentsprechender Nutzung sowie der Hartverlötung durch unterschiedliche Temperaturausdehnungskoeffizienten bewirkten Axialspannungen vom Bohrerschaft in den Hartstoffkopf erfolgt, welche am Axialstoss im wesentlichen abgebaut und somit praktisch nicht schädigend wirksam sind.

Vorteilhaft weist der Hartstoffkopf genau vier umlaufend verteilte Schneidkanten auf, wodurch diese symmetrisch zu einem viergängigen Schaft anordenbar sind.

Vorteilhaft sind je genau zwei gegenüberliegende Schneidkanten zu je zwei Hauptschneiden und zwei radial kürzeren Nebenschneiden zugeordnet, wodurch das Armierungsverhalten weiter verbessert wird.

Vorteilhaft ist der Hartstoffkopf über die in der konkaven Seitenfläche angeordnete Randtasche mit einer formschlüssig passenden Axialverzapfung eines Schaftendes eines Drehschlagbohrers stoffschlüssig verbunden, weiter vorteilhaft bspw. mit einer Bronze hart verlötet, wodurch ein Drehschlagbohrer mit hoher Bohrleistung ausgebildet ist.

Vorteilhaft ist der Hartstoffkopf über die Bodenfläche mit einer Stirnfläche des Schaftendes verlötet, wodurch eine gute Schlagimpulsübertragung erzielt ist.

Vorteilhaft setzt sich eine bis zum Axialstoss axial gerade verlaufende, weiter vorteilhaft zur Aufnahme von hervorquellender Bronze leicht angefaste, Seitenfläche über diesen Axialstoss axial glatt (d.h. ohne Sprung oder Knick) fort, wodurch am Axialstoss keine Querschnittsänderung der sich bis zum Hüllkreis erstreckenden Abfuhrnut auftritt, in welcher sich Abraum festsetzen könnte.

Vorteilhaft ist ein kreuzförmiger Hartstoffkopf über genau vier Randtaschen mit genau vier zugeordneten, umlaufend länglichen Axialverzapfungen verlötet, wodurch ein zum Drehschlagbohren von armiertem Beton optimierter Drehschlagbohrer mit hoher Bohrleistung ausgebildet ist.

Alternativ vorteilhaft ist ein X-förmiger Hartstoffkopf über genau zwei einander gegenüberliegenden Randtaschen mit genau zwei zugeordneten, umlaufend länglichen Axialverzapfungen des Schaftendes verlötet, wodurch ein zum Drehschlagbohren von armiertem Beton optimierter Drehschlagbohrer mit hoher Bohrleistung ausgebildet ist.

Vorteilhaft sind die länglichen Axialverzapfungen radial aussen an der Nebenschneide dicker als radial aussen an der Hauptschneide, wodurch an der geringer torsionsbeanspruchten Nebenschneide höhere Drehmomente eingeleitet werden können.

### Die Erfindung wird bezüglich eines vorteilhaften Ausführungsbeispiels näher erläutert mit:

Fig. 1 als Drehschlagbohrer in Aufsicht;
Fig. 2 als Drehschlagbohrer im Längsschnitt gemäss der Schnittlinie II - II in Fig. 1;
Fig. 3 als Drehschlagbohrer im Querschnitt gemäss der Schnittlinie III - III in Fig. 2;
Fig. 4 als Variante im Querschnitt (vgl. Schnittlinie lV - IV in Fig. 5);
Fig. 5 als Variante in Seitenansicht (vgl. Pfeil V in Fig. 4).

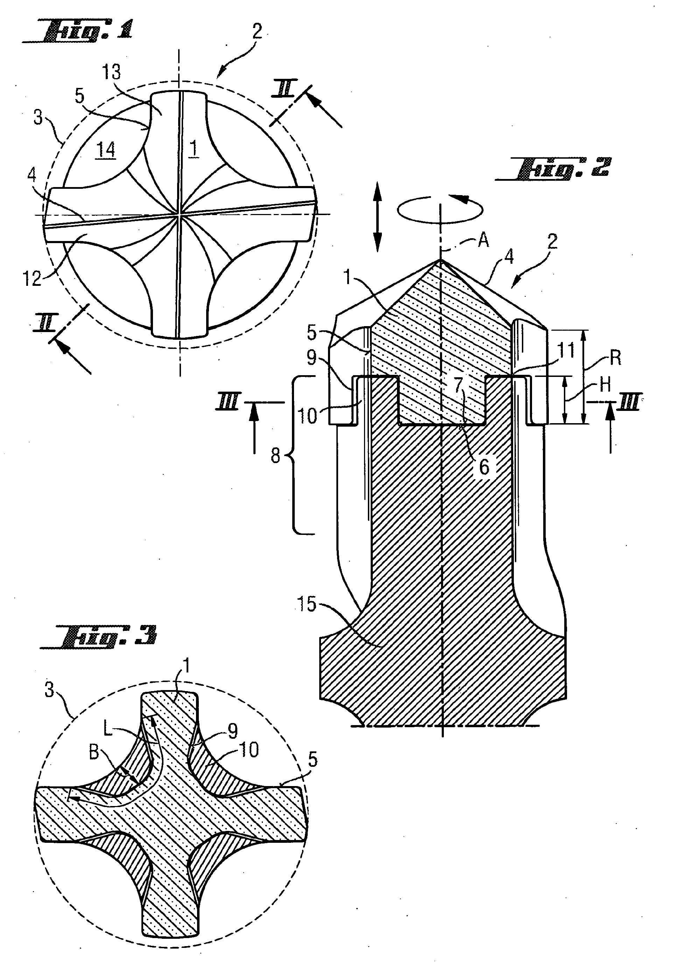

Nach der Fig. 1 weist ein Hartstoffkopf 1 eines Drehschlagbohrers 2 genau vier in einem Hüllkreis 3 umlaufend verteilte Schneidkanten 4 und genau vier umlaufend dazwischen liegende konkave Seitenflächen 5 auf, von denen jeweils zwei einander gegenüberliegen. Je genau zwei gegenüberliegende Schneidkanten 4 sind je zwei Hauptschneiden 12 und zwei radial kürzeren Nebenschneiden 13 zugeordnet. Von jeder Seitenfläche 5 bis zum Hüllkreis 3 erstreckt sich je eine axial verlaufende Abfuhrnut 14.

Nach der Fig. 2 liegt bei einem um die Achse A viergängig gewendelten Drehschlagbohrer 2 beim Hartstoffkopf 1 den Schneidkanten 4 eine Bodenfläche 6 gegenüber, welche an einer Stirnfläche 7 eines axial verlaufenden Schaftende 8 eines viergängig gewendelten Bohrerschafts 15 mit Bronze (nicht dargestellt) hart verlötet ist. Die Seitenflächen 5 bilden je eine zur Bodenfläche 6 offene Randtasche 9 aus, in welche passend zugeordnete, formschlüssig eingreifende Axialverzapfungen 10 des Schaftendes 8 ebenfalls mit Bronze (nicht dargestellt) hart verlötet sind, wobei sich eine bis zu einem Axialstoss 11 axial gerade verlaufende Seitenfläche 5 über diesen Axialstoss 11 hinweg axial glatt fortsetzt. Sowohl die Randtaschen 9 als auch die Axialverzapfungen 10 sind axial prismatisch ausgebildet, wobei die axiale Taschenhöhe H der Randtasche 9 und der Axialverzapfung 10 bei der Hälfte der Radialrandhöhe R der Seitenfläche 5 liegt.

Nach Fig. 3 ist der kreuzförmige Hartstoffkopf 1 über genau vier Randtaschen 9 mit genau vier zugeordneten, umlaufend länglichen Axialverzapfungen 10 mit Bronze (nicht dargestellt) hart verlötet, wobei jede Seitenfläche 5 genau eine Randtasche 9 ausbildet, die sich ausschliesslich über einen Mittenlängenbereich der konkaven Seitenfläche 5 erstreckt. Die Taschenbreite B der Randtasche 9 liegt bei einem Zehntel des Durchmessers des Hüllkreises 3 und die Summe der (in der Querschnittsebene gemessenen) Taschenkonturlängen L aller Randtaschen 9 liegt bei der Hälfte des Umfangs des Hüllkreises 3.

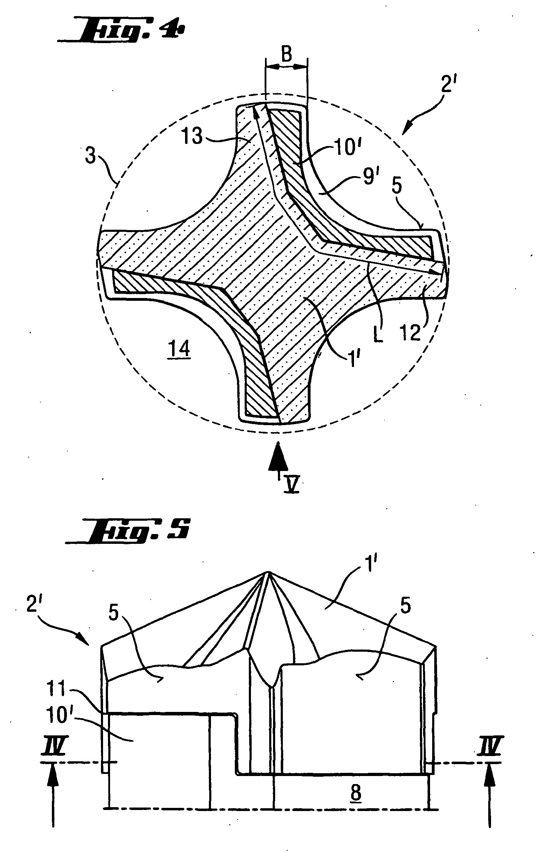

Im Unterschied zu Fig.1 bis Fig. 3 bilden nach der in Fig. 4 und Fig. 5 dargestellten Variante des Drehschlagbohrers 2' bei einem X-förmigen Hartstoffkopf 1' ausschliesslich zwei einander gegenüberliegende Seitenflächen 5 je eine Randtasche 9' aus, die mit genau zwei zugeordneten, umlaufend länglichen Axialverzapfungen 10' des Schaftendes 8 mit Bronze (nicht dargestellt) hart verlötet sind, wobei sich die Taschenkonturlänge L der Randtasche 9' über die gesamte (in der Querschnittsebene gemessene) Seitenlänge der konkaven Seitenfläche 5 erstreckt. Da die umlaufend länglichen Axialverzapfungen 10' überall dünner als die Taschenbreite B der Randtaschen 9' sind, kommt es radial aussen am Axialstoss 11 zu einem sprungförmigen Übergang, der eine sich bis zum Hüllkreis 3 erstreckende Abfuhrnut 14 schaftseitig vergrössert. Dabei sind die länglichen Axialverzapfungen 10' radial aussen an der Nebenschneide 13 dicker als radial aussen an der Hauptschneide 12.

## Patentansprüche

1. Hartstoffkopf für einen Drehschlagbohrer (2, 2') mit zumindest drei in einem Hüllkreis (3) umlaufend verteilten Schneidkanten (4), mit einer, zur stoffschlüssigen Befestigung an einem Schaftende (8) eines Bohrerschafts (15) des Drehschlagbohrers (2, 2') ausgebildeten, den Schneidkanten (4) gegenüberliegenden Bodenfläche (6) und konkaven Seitenflächen (5) vorhanden sind, **dadurch gekennzeichnet, dass** in zumindest zwei einander gegenüberliegenden konkaven Seitenflächen (5) je eine zur Bodenfläche (6) offene Randtasche (9,9') ausgebildet ist, in welche eine passend zugeordnete Axialverzapfung (10, 10') des Schaftendes (8) formschlüssig eingreifbar ist.

2. Hartstoffkopf nach Anspruch 1, **dadurch gekennzeichnet, dass** die Randtasche (9,9') axial prismatisch ausgebildet ist.

3. Hartstoffkopf nach Anspruch 1 oder 2, **dadurch gekennzeichnet, dass** sich die Taschenkonturlänge (L) der Randtasche (9) ausschliesslich über einen Mittenlängenbereich der konkaven Seitenfläche (5) erstreckt.

4. Hartstoffkopf nach Anspruch 1 oder 2, **dadurch gekennzeichnet, dass** sich die Taschenkonturlänge (L) der Randtasche (9') über die gesamte Seitenlänge der Seitenfläche (5) erstreckt.

5. Hartstoffkopf nach einem der Ansprüche 1 bis 4, **dadurch gekennzeichnet, dass** genau vier konkave Seitenflächen (5) je eine Randtasche (9) ausbilden.

6. Hartstoffkopf nach einem der Ansprüche 1 bis 4, **dadurch gekennzeichnet, dass** ausschliesslich zwei einander gegenüberliegende Seitenflächen (5) je eine Randtasche (9') ausbilden.

7. Hartstoffkopf nach einem der Ansprüche 1 bis 6, **dadurch gekennzeichnet, dass** die Summe der Taschenkonturlängen (L) aller Randtaschen (9,9') im Bereich von einem Drittel bis zu zwei Drittel des Umfangs des Hüllkreises (3) liegt.

8. Hartstoffkopf nach einem der Ansprüche 1 bis 7, **dadurch gekennzeichnet, dass** die Taschenbreite (B) der Randtasche (9,9') im Bereich von einem Zwanzigstel bis zu einem Fünftel des Durchmessers des Hüllkreises (3) liegt.

9. Hartstoffkopf nach einem der Ansprüche 1 bis 8, **dadurch gekennzeichnet, dass** die axiale Taschenhöhe (H) der Randtasche (9,9') im Bereich von einem Drittel bis zu zwei Dritteln der Radialrandhöhe (R) der Seitenflächen (5) liegt.

10. Hartstoffkopf nach einem der Ansprüche 1 bis 9, **dadurch gekennzeichnet, dass** genau vier umlaufend verteilte Schneidkanten (4) vorhanden sind.

11. Hartstoffkopf nach Anspruch 10, **dadurch gekennzeichnet, dass** je genau zwei gegenüberliegende Schneidkanten (4) je zwei Hauptschneiden (12) und zwei radial kürzeren Nebenschneiden (13) zugeordnet sind.

12. Hartstoffkopf nach einem der Ansprüche 1 bis 11, **gekennzeichnet durch** eine stoffschlüssige Verbindung über die in der konkaven Seitenfläche (5) angeordnete Randtasche (9,9') mit einer formschlüssig passenden Axialverzapfung (10, 10') des Schaftendes (8) des Drehschlagbohrers (2, 2').

13. Hartstoffkopf nach Anspruch 12, **gekennzeichnet durch** eine Verlötung der Bodenfläche (6) mit einer Stirnfläche (7) des Schaftendes (8).

14. Hartstoffkopf nach Anspruch 12 oder 13, **dadurch gekennzeichnet, dass** sich eine bis zu einem Axialstoss (11) axial gerade verlaufende Seitenfläche (5) über diesen axial glatt fortsetzt.

15. Hartstoffkopf nach einem der Ansprüche 12 bis 14, **gekennzeichnet durch** eine kreuzförmige Ausführung und eine Verlötung der genau vier Randtaschen (9) mit genau vier zugeordneten, umlaufend länglichen Axialverzapfungen (10).

16. Hartstoffkopf nach einem der Ansprüche 12 bis 14, **gekennzeichnet durch** eine X-förmige Ausführung und eine Verlötung von genau zwei einander gegenüberliegenden Randtaschen (9') mit genau zwei zugeordneten, umlaufend länglichen Axialverzapfungen (10').

17. Hartstoffkopf nach Anspruch 16, **dadurch gekennzeichnet, dass** die länglichen Axialverzapfungen (10') radial aussen an der Nebenschneide (13) dicker als radial aussen an der Hauptschneide (12) sind.

## Claims

1. Head of hard cutting material for a percussive rotary drill bit (2, 2'), having at least three cutting edges (4) which are distributed in the circumferential direction within an enveloping circle (3), having a bottom face (6) which is designed for fastening by physical union to one end (8) of a shank of the percussive rotary drill bit (2, 2') and which is in an opposite position from the cutting edges (4) and concave side-faces (5) are present, **characterised in that** there is formed in each of at least two side-faces (5) situated in opposite positions from one another an edge-pocket (9, 9') which is open in the direction of the bottom face (6) and in which an axial tenon (10, 10') on the end (8) of the shank, which axial tenon (10, 10') is associated as a close fit, is able to engage in positive engagement.

2. Head of hard cutting material according to claim 1, **characterised in that** the edge pocket (9, 9') is of a prismatic form in the axial direction.

3. Head of hard cutting material according to claim 1 or 2, **characterised in that** the length (L) of the outline of the edge pocket (9) extends only over a lengthwise region in the centre of the concave edge pocket (5).

4. Head of hard cutting material according to claim 1 or 2, **characterised in that** the length (L) of the outline of the edge pocket (9') extends for the entire length of the side which forms the side-face (5).

5. Head of hard cutting material according to one of claims 1 to 4, **characterised in that** precisely four concave side-faces (5) each form an edge pocket (9).

6. Head of hard cutting material according to one of claims 1 to 4, **characterised in that** only two side-faces (5) situated in opposed positions each form an edge pocket (9).

7. Head of hard cutting material according to one of claims 1 to 6, **characterised in that** the sum of the lengths (L) of the outlines of all the edge pockets (9, 9') lies within the range of a third to two thirds of the circumference of the enveloping circle (3).

8. Head of hard cutting material according to one of claims 1 to 7, **characterised in that** the width (B) of the edge pocket (9, 9') lies within the range of a twentieth to a fifth of the diameter of the enveloping circle (3).

9. Head of hard cutting material according to one of claims 1 to 8, **characterised in that** the axial height (H) of the edge pocket (9, 9') lies within the range of a third to two thirds of the radial height (R) of the edges of the side faces (5).

10. Head of hard cutting material according to one of claims 1 to 9, **characterised in that** precisely four cutting edges (4) which are distributed in rotation are present.

11. Head of hard cutting material according to claim 10, **characterised in that** each group of precisely two cutting edges (4) situated in opposite positions is associated with two main cutting lips (12) and with two subsidiary cutting lips (13) which are shorter in the radial direction.

12. Head of hard cutting material according to one of claims 1 to 11, **characterised by** a connection by physical union, via the edge pocket (9, 9') arranged in the concave side face (5), to an axial tenon (10, 10') on the end (8) of the shank of the percussive rotary drill bit (2, 2'), which axial tenon (10, 10') fits by positive engagement.

13. Head of hard cutting material according to claim 12, **characterised by** soldering or brazing of the bottom face (6) to an end-face (7) of the end (8) of the shank.

14. Head of hard cutting material according to claim 12 or 13, **characterised in that** a side face (5) which extends in a straight line as far as an axial butt joint (11) extends beyond the latter in the axial direction as a flush surface.

15. Head of hard cutting material according to one of claims 12 to 14, **characterised by** a cruciform layout and soldering or brazing of the precisely four edge pockets (9) to precisely four associated axial tenons (10) which are elongated in the circumferential direction.

16. Head of hard cutting material according to one of claims 12 to 14, **characterised by** an X-shaped layout and soldering or brazing of precisely two edge pockets (9') situated in opposite positions to precisely two associated axial tenons (10') which are elongated in the circumferential direction.

17. Head of hard cutting material according to claim 16, **characterised in that** the elongated axial tenons (10') are thicker in the radially outward direction at the subsidiary cutting lip (13) than they are in the radially outward direction at the main cutting lip (12).

## Revendications

1. Tête en substance dure pour un foret rotopercutant (2, 2') avec au moins trois arêtes de coupe (4) réparties en périphérie dans un cercle d'enveloppe (3), comprenant une surface de fond (6), conformée pour être fixée par conjugaison de matières à une extrémité de tige (8) d'une tige de foret (15) du foret rotopercutant (2, 2') et située à l'opposé des arêtes de coupe (4), et comprenant des surfaces latérales concaves (5), **caractérisée en ce que** dans au moins deux surfaces latérales concaves opposées (5) est ménagée une poche de bordure (9, 9') qui est ouverte vers la surface de fond (6) et dans laquelle un tenon axial à ajustement correspondant (10, 10') de l'extrémité de tige peut s'engager par complémentarité de formes.

2. Tête en substance dure selon la revendication 1, **caractérisée en ce que** la poche de bordure (9, 9') est conformée en prisme axial.

3. Tête en substance dure selon la revendication 1 ou 2, **caractérisée en ce que** la longueur de contour de poche (L) de la poche de bordure (9) ne s'étend que sur une zone de longueur médiane de la surface latérale concave (5).

4. Tête en substance dure selon la revendication 1 ou 2, **caractérisée en ce que** la longueur de contour de poche (L) de la poche de bordure (9') s'étend sur toute la longueur latérale de la surface latérale (5).

5. Tête en substance dure selon une des revendications 1 à 4, **caractérisée en ce que** exactement quatre surfaces latérales concaves (5) forment chacune une poche de bordure (9).

6. Tête en substance dure selon une des revendications 1 à 4, **caractérisée en ce que** seulement deux surfaces latérales opposées (5) forment chacune une poche de bordure (9').

7. Tête en substance dure selon une des revendications 1 à 6, **caractérisée en ce que** la somme des longueurs de contour de poche (L) de toutes les poches de bordure (9, 9') est comprise entre un tiers et deux tiers de la circonférence du cercle d'enveloppe (3).

8. Tête en substance dure selon une des revendications 1 à 7, **caractérisée en ce que** la largeur de poche (B) de la poche de bordure (9, 9') est comprise entre un vingtième et un cinquième du diamètre du cercle d'enveloppe (3).

9. Tête en substance dure selon une des revendications 1 à 8, **caractérisée en ce que** la hauteur axiale de poche (H) de la poche de bordure (9, 9') est comprise entre un tiers et deux tiers de la hauteur radiale de bordure (R) des surfaces latérales (5).

10. Tête en substance dure selon une des revendications 1 à 9, **caractérisée en ce que** exactement quatre arêtes de coupe (4) réparties en périphérie sont prévues.

11. Tête en substance dure selon la revendication 10, **caractérisée en ce que** exactement deux arêtes de coupe opposées (4) sont associées à chaque fois à deux taillants principaux (12) et à deux taillants secondaires plus courts radialement (13).

12. Tête en substance dure selon une des revendications 1 à 11, **caractérisée par** une liaison par conjugaison de matières, par l'intermédiaire de la poche de bordure (9, 9') disposée dans la surface latérale concave (5), avec un tenon axial ajusté par complémentarité de formes (10, 10') de l'extrémité de tige (8) du foret rotopercutant (2, 2').

13. Tête en substance dure selon la revendication 2, **caractérisée par** un brasage de la surface de fond (6) avec une surface frontale (7) de l'extrémité de tige (8).

14. Tête en substance dure selon la revendication 12 ou 13, **caractérisée en ce qu'**une surface latérale (5) s'étendant axialement de manière rectiligne jusqu'à un joint axial (11) se prolonge sans décrochement au-delà de celui-ci.

15. Tête en substance dure selon une des revendications 12 à 14, **caractérisée par** une conception cruciforme et par un brasage des exactement quatre poches de bordure (9) avec exactement quatre tenons axiaux associés et allongés en périphérie (10).

16. Tête en substance dure selon une des revendications 12 à 14, **caractérisée par** une conception en X et par un brasage d'exactement deux poches de bordure mutuellement opposées (9') avec exactement deux tenons axiaux associés et allongés en périphérie (10').

17. Tête en substance dure selon la revendication 16, **caractérisée en ce que** les tenons axiaux allongés (10') sont plus épais sur le côté extérieur radial du taillant secondaire (13) que sur le côté extérieur radial du taillant principal (12).
